# EUROPEAN PATENT APPLICATION

(11) **EP 2 484 550 A1**
(43) Date of publication of application: **08.08.2012**
(21) Application number: 10191215.2
(22) Date of filing: 15.11.2010
(51) Int. Cl.: B60P 1/02

(54) **Vehicle**

(71) Applicant: ES Smede & Maskinservice ApS, 8500 Grenaa (DK)
(72) Inventor: Wulff, Olaf, 8500, Grenaa (DK)
(74) Representative: Høiberg A/S

(57) **Abstract**

The present invention concerns a vehicle for storage of a load during transportation, such as a trailer for a tractor-trailer freight carrying vehicle comprising a load volume, comprising a top, bottom, front end, a loading end, a first side, a second side and an adjustable partition deck, provided between the first side and the second side, dividing at least part of the cargo volume into a upper and a lower compartment wherein the partition deck is provided with elevation means for adjusting the vertical position of the partition deck, and the elevation means comprises an actuator system connected to the partition deck via a wire pulling system.

## Description

### Field of the invention

The present invention relates to a vehicle for storage of a load during transportation, such as a trailer for a tractor-trailer freight carrying vehicle.

### Background of the Invention

When packing a vehicle such as a trailer there are, among other things, the issue of storage space and more particularly, the way the trailer is constructed so as to facilitate the storing within the vehicle.

US 2004/0028496 disclose a load carrying vehicle of the type that has a load deck and a load platform supported by a platform support structure. In its operative condition, the load platform is supported on the platform support structure at an elevated level above the load deck and approximately parallel thereto, thus permitting items to be located both on the load platform and on the load deck below the load platform for transportation purposes.

A disadvantage with the prior art is that it can be cumbersome to arrange the load inside the vehicle. The load platform is stationary and placing load can be difficult, ultimately it gives a unsatisfactory utilization of the storage volume of the vehicle.

### Summary of the invention

Considering the aspects described above, it is an object of the present invention to provide a vehicle where it is possible to utilise the volume inside the vehicle and at the same time make the loading and unloading easy.

This is achieved by a vehicle for storage of a load during transportation, such as a trailer for a tractor-trailer freight carrying vehicle comprising, a load volume comprising a top, bottom, front end, a loading end, a first side and a second side, an adjustable partition deck, provided between the first side and the second side, dividing at least part of the cargo volume into a upper and a lower compartment, wherein the partition deck is provided with elevation means for adjusting the vertical position of the partition deck, and the elevation means comprises an actuator system connected to the partition deck via a wire pulling system.

By using the vehicle according to the invention, it is possible to store, load and/or unload larger amounts of cargo in the vehicle than conventional vehicles. Cargo can be stored on both the partition deck and the bottom of the vehicle. The use of a wire pulling system, makes it easy to raise and lower the partition deck. This enables the partition deck to be filled and then raised so the space under the deck can be filled. This could also be done the other way around.

The wire could be any rope like wire that could be used to connect an actuator to the partition deck. This could be a wire rope comprising of several strands of metal wire. The metal could be steel or iron. The actuator system that is connected to the partition deck via the wire pulling system, could be any operating device that is able to produce a motion of the wire. This could be a linear actuator such as a hydraulic actuator, or a wheel or axle that by rotation actuates the partition deck via wire.

A vehicle is to be understood as any device that is designed to be used to transport goods or cargo. This could be a self-propelled vehicle such as a truck or lorry, or an unpowered vehicle such as a trailer or semi-trailer that needs to be pulled by a powered vehicle.

By vertical it is meant, that at least part of the movement must have a component that is in the vertical direction. The movement could also be non-linear. An example, a movement of the partition deck could be, that it first moves up and/or then upwards at an angle in relation to vertical or the other way around.

The load of the vehicle could be any cargo or freight that needs to be transported; this could be a pallet with goods.

In an embodiment, the actuator system comprises a plurality of actuators which is operated in a parallel manner. Using more than one actuator can be an advantage if the load is large, thus gives sufficient lifting power. When using a wire pulling system, it is preferred that the actuators are operated simultaneously.

In an embodiment, the actuator system comprises a single actuator connected to the partition deck. By using only one actuator, the system can be made simple and relatively compact. Further it could make the use of complicated control circuits obsolete.

Preferably, the partition deck comprises a first side region, adjacent to the first side of the cargo volume, and a second side region, adjacent to the second side of the cargo volume, wherein the wire pulling system is connected to the first side region of the partition deck, and to the second side region of the partition deck. Pulling in both sides of the deck, provides a greater stability of the deck and at the same time secures that the area of the deck is unobstructed as the wires are connected at the side regions. The part of the wire pulling system that would be connected to the first side region, and the wire pulling system that would be connected to the second side region, could be symmetrically configured. this makes the connection to the actuator more simple, and a simple actuator could be used.

Preferably, the wire pulling system is connected to the first side region of the partition deck in at least two separate points, and to the second side region of the partition deck, in at least two separate points. Connecting the wire to several points on the deck stabilises the partition deck.

In an embodiment, the vehicle comprises wheels, preferably the vehicle is a trailer. This could be used in a tractor-trailer freight carrying vehicle as is one of the conventional ways of transporting cargo and goods.

In an embodiment, the bottom of the vehicle is positioned lower than the rotating axle of the wheels. Conventionally, the load volume is positioned on top a support and the wheels under the support; by utilising the bottom part of the vehicle for storage, it is possible to have a larger volume.

Preferably, the vehicle is adapted to be able to increase and decrease the vertical distance between the bottom and the rotating axle of the wheels, and wherein the distance can be increased so the vehicle bottom will rest on the ground. It can be advantageously to be able to hinder movement of the vehicle, for example during loading and unloading, but also for storing purposes.

In an embodiment, the vehicle comprises a vertical positional lift deck, located at the loading end of the vehicle. This facilitates the loading and the unloading of the vehicle, as the lift can be used to access the partition deck and the bottom of the vehicle where the cargo is stored.

The lift deck could be connected to a lift actuator system via a lift wire pulling system. This could be in similar fashion as for the partition deck. Further, the lift deck and the partition deck could be non-overlapping, preferably in such a way, that when the lift deck and the partition deck are situated at the same vertical level, they will be adjacent to each other. When the lift deck and the partition deck are positioned at the same height it would then be easy to move load from one to the other and thus facilitate the loading and unloading of the vehicle.

In an embodiment the vehicle comprises a first side wall at the first side and a second side wall at the second side, and wherein it further comprises holding means, which is adapted to hold the partition deck in a desired height so that it is possible to remove the tension on the wire pulling system from the load on the partition deck. Advantageously the partition deck is only lowered and raised during loading and unloading. During transportation the partition deck could be locked to the outer structure of the vehicle and hereby holding it in a specific height. This releases the stress on the wire and prolongs the lifetime of the wire pulling system.

Advantageously, the actuator system is positioned near the front end of the vehicle. In that way the actuator can be hidden away without being positioned to obstruct the loading and unloading that takes place in the loading end. Additionally, if the vehicle is a trailer this position is the most secure place of the trailer and the valuable actuator system would then have a more superior protection, than near the loading end.

### Description of the drawings

The invention will in the following be described in greater detail with reference to the accompanying drawings, in which:
- Fig. 1: Cross-sectional view of a vehicle according to an embodiment of the invention seen from left side of the vehicle.
- Fig. 2: View of an actuator system according to an embodiment of the invention.
- Fig. 3: Cross-sectional top view of a vehicle according to an embodiment of the invention.
- Fig. 4: View of a vehicle according to an embodiment of the invention seen from the load end.
- Fig. 5: Cross-sectional view of a vehicle according to an embodiment of the invention seen from left side of the vehicle, where the decks have an alternative position.
- Fig. 6: Cross-sectional view of a vehicle according to an embodiment of the invention seen from left side of the vehicle, where the decks have another position.

### Detailed description of the invention

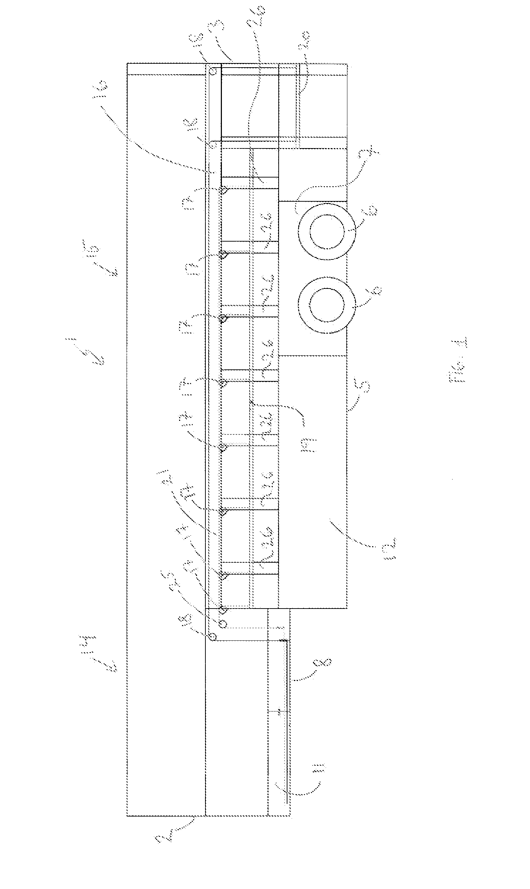

Fig 1 shows a vehicle 1 according to an aspect of the invention. It is a semi-trailer 1, a trailer without a front axle, which has to be pulled by a road tractor, where a large proportion of its weight is supported by the tractor.

The trailer has a front end 2, a loading end 3, a top 4 and a bottom 5,8. The trailer 1 has two pairs of wheels 6. The inside volume of the trailer 1 is defined by the top 4, bottom 5, the left side 9, the right side 10, the front end 2 and the loading end 3. The volume inside the trailer is restricted by the fender 7 for the wheels 6. The front part of the trailer 14, has an elevated bottom 8 in relation the bottom 5 at the rear part of the trailer 15; this is due to the connecting means for the tractor. This is well known to the skilled person and will not be explained further. At the front part of the trailer 14 there is also an actuator compartment 11 which is described below.

The trailer has a wire pulley frame, for the pulleys 17 of the wire pulling system, having on each side an upper member 16 and several vertical members 26. On top of the pulley frame there is a tarp frame. In this case the two frames are made as a single frame. The sides of the trailer 1 is on the lower part, under the pulley frame, permanently covered by a plate of metal and on the upper part it is a frame on which a tarp and/or a cover can be secured to protect the load on the trailer from harsh weather, such as rain, wind or snow. Further it can hold the cargo in place during transportation. The trailer could alternatively be of the closed type.

Within the rear part of the trailer 15 there is a partition deck 19 which can be moved up and down. The partition deck 19 does not cover the entire rear part of the trailer 15, as there is also a lift deck 20 at the loading end of the trailer 1. The lift deck 20 could also be understood as an elevator, this elevator or lift deck could be internal and/or partly internal.

The partition deck 19 is connected to a wire set. The wire set starts in one of the primary actuators 12 to which two wires are connected. The directions of the wires are controlled by the pulleys 17. The wire is in one end connected to a primary actuator 12, it is then placed in a longitudinally direction to the pulley 23 where they run outwards to the pulley 24 and then upwards to the first pulley 25, the wire run along the upper part of the support frame 16. This is described in detail below. An additional wire is attached to the first wire. One of the wires continue along the upper member 16, and the other wire changes the direction at the pulley 17 and run along the vertical member 26 and is attached to the partition deck 1. the wire that continues along the upper member 16 repeats the dual wire splitting of the direction at each vertical member 26. When the last pulley 17 is reached there is no additional wire attached to it, it is simply guided down to and attached to the partition deck 19. This is done for each side of the trailer 1 so that the partition deck 19 can be hung in a stable manner in the wires. If the left and the right wire system are pulled at the same time, the deck 19 is elevated and by letting go of the wire, the partition deck 19 is lowered. The attachment of an additional wire could alternatively be a splitting of the wire/rope or there could be one single wire connecting the actuator with each connection point on the partition deck 19. It could also be a mix of the multiple single wire and the wire splitting methods the desired function is that the primary actuator 12 is connected to a wire that can pull the partition deck 19 in a vertical direction.

The wire could be a wire rope made from several strands of metal wire which is a little flexible. This flexibility is an advantage because there will be an even applied force to the partition deck 19. This could be due to an uneven distribution of load on the partition deck.

Using such a system of wire pulleys has that the advantage that the force applied by the actuator is evened out on the entire partition deck 19 this is partly due to the fact that the wire is slightly elastic. The wire used is steel wire rope which consists of several strands of metal wire twisted into a helix, in other words conventional wires. Conventional rope or string could also be used.

In fig 1 there is also disclosed a lift deck 20. The lift deck is in principle connected in the same manner as the partition deck. The wire pulling system is connected to the secondary actuator 13 as described below. The wires follow the upper member 16 and on to the first pulley 18, where the wire is split and one is directed downwards by the pulley 18 and the other continue towards the last pulley 18, and then directed downwards both wires are connected to the lift deck 20. It is then possible to lower and raise the lift deck 20. Any method or arrangement used for the partition deck 19 is also applicable for the lift deck 20 and the other way around.

The upper member 16 and the vertical members 26 are partly hollow and the wires and the pulleys are incorporated inside the members. This is done to protect the wire pulling system and to protect the operator from the moving parts which could lead to accidents.

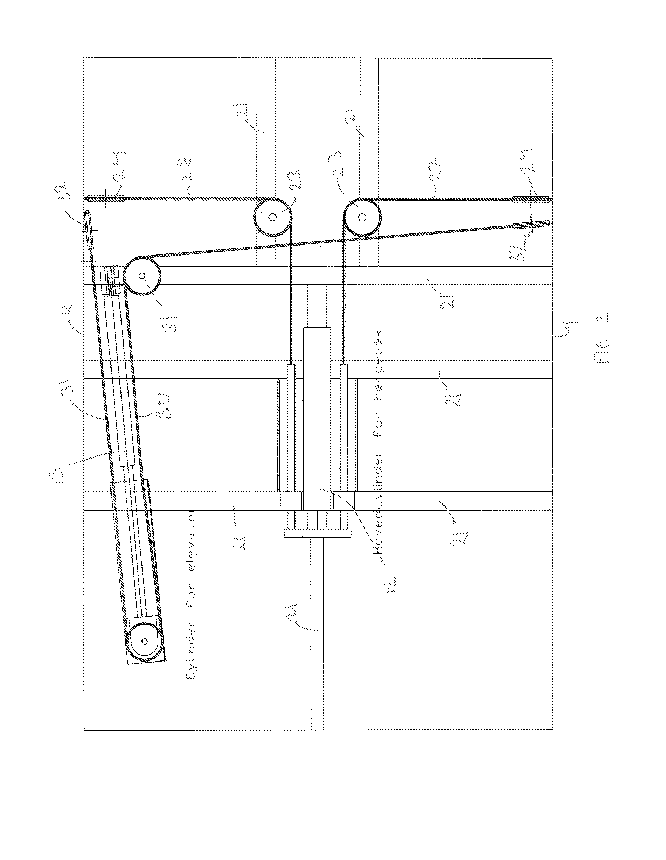

Fig 2 discloses the actuator compartment 11. The actuator compartment 11 is situated in the bottom 8 of the front part of the trailer 14. By using that location, it is secures against damage if there are minor accidents. Additionally the position gives a better weight distribution of the trailer 1.

The compartment 11 has a plurality of stiffening members 21. They secure that the actuators and pulleys in the actuator compartment 11 are kept in place. There is a primary actuator 12 positioned in the centre of the compartment 11. In this case, it is a linear hydraulic actuator operation which is known to the skilled person. The actuator could also be any other type of actuator. It is connected to the first or left wire 27 and the second or right wire 28. The direction of the wires is changed by the pulleys 23 and guided towards the sides of the trailer 1. Here the two wires are guided upwards by the pulleys 24. They are then attached to the partition deck 19 in the manner described above. When the primary actuator 12 is extended, the wires 27, 28 are pulled and the partition deck 19 is raised/moved up. When length of the primary actuator 12 is decreased the partition deck 19 is lowered/moved down.

The actuator compartment 11 also has a secondary actuator 13. This is used to control the position of the lift deck 20. This actuator is smaller than the primary actuator 12 because it does not have to be able to move as large a load than the primary actuator 12. The partition deck 19 is designed to handle a larger load than the lift deck 20, hence the primary actuator 12 would in this case have to be able to apply a larger force than the secondary actuator 13. The secondary actuator 13 is attached to the stiffening members 21. The secondary wire 29 is attached to the secondary actuator 13 so that the left part of the secondary wire 30 is guided to a pulley that directs the wire to the left or first side of the vehicle 1 there it is directed upwards by the pulley. On the right side the right part of the secondary wire 30 is guided directly to the pulley 32 which directs the wire upwards. The secondary wires are then guided to the lift deck 20, as explained above, and attached thereto in such a manner that the vertical position of the lift deck 20 can be controlled by the actuator 13. When the secondary actuator 13 is expanded, the lift deck 20 is raised and when the length if the secondary actuator 13 is decreased the lift deck is lowered.

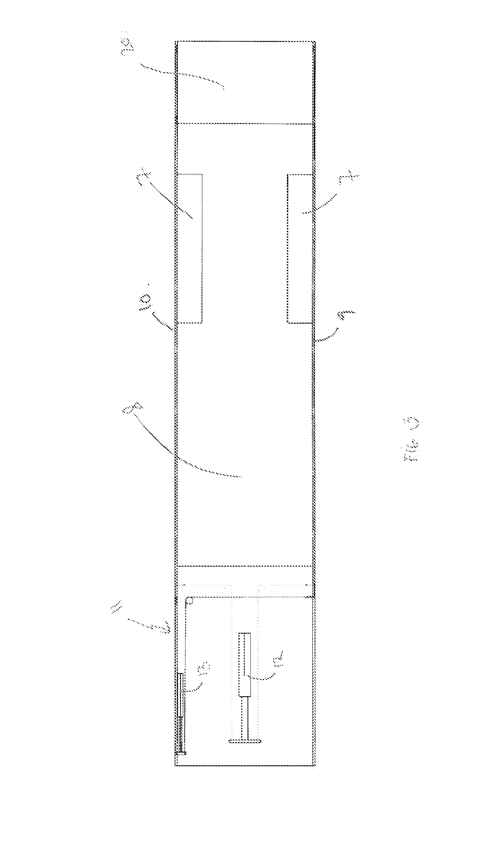

Fig 3 shows an embodiment of the invention, this embodiment is slightly different than the one shown in fig 2. Here the position of the secondary actuator 13 is different. However, this does not change the function of the secondary actuator 13, the principles are the same. The vehicle 1 is shown according to the invention, in a cross-sectional view from above/the top. The fenders 7 for the wheels can be seen here. The fenders are present inside the trailer volume and does in that regard decrease the inner space of the trailer 1. As the partition deck 19 has a width from the left side wall to the right side wall the fenders 7 block the lowering of the partition deck 19 and thus define the lowest position that the partition deck 19 can have.

In the front end of the semi-trailer 1, as seen on fig. 3, the actuator compartment 11 can be seen, its function is explained above. In the loading end 3 of the vehicle 1 the lift deck 20 is positioned.

The lift deck 20 is positioned inside the load compartment of the trailer 1, it can be moved up and down unhindered of the position of the partition deck 19. When the two decks are at the same level the distance between them is small so that it is easy for a pallet jack or similar load moving equipment to move from one to the other with ease and without the cargo falling off the pallet jack.

Fig 3 shows that part of the wire pulling system and part of the lift wire pulling system is incorporated in to the side walls.

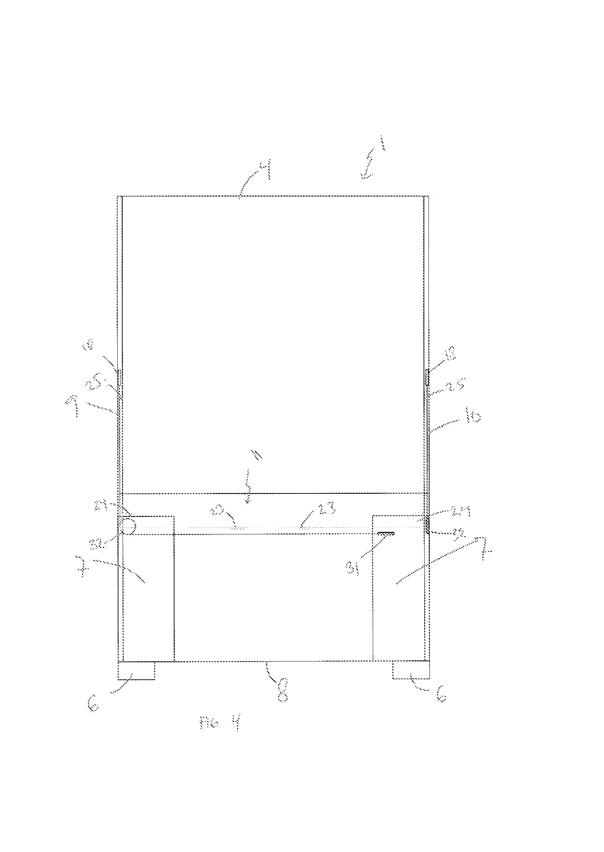

Fig 4 shows the vehicle 1 from the loading end 3. The wire pulling and the lift wire pulling system is highlighted. Here some of the pulleys and the wires are shown.

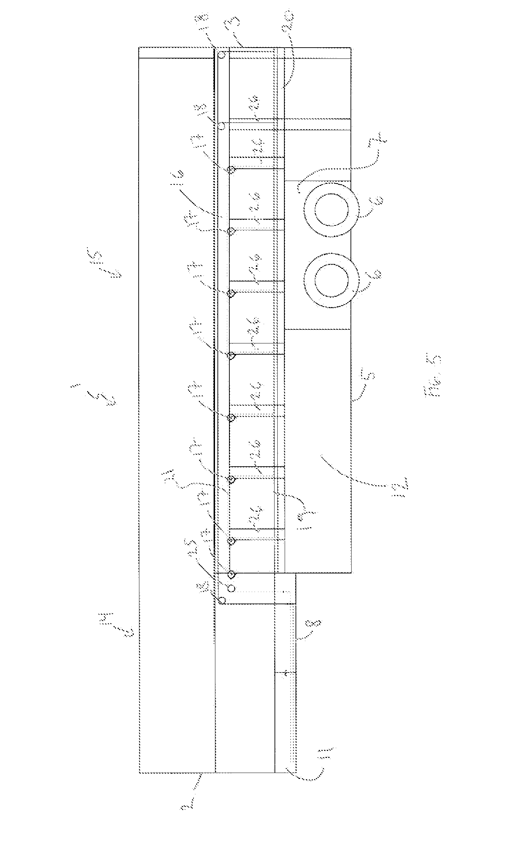

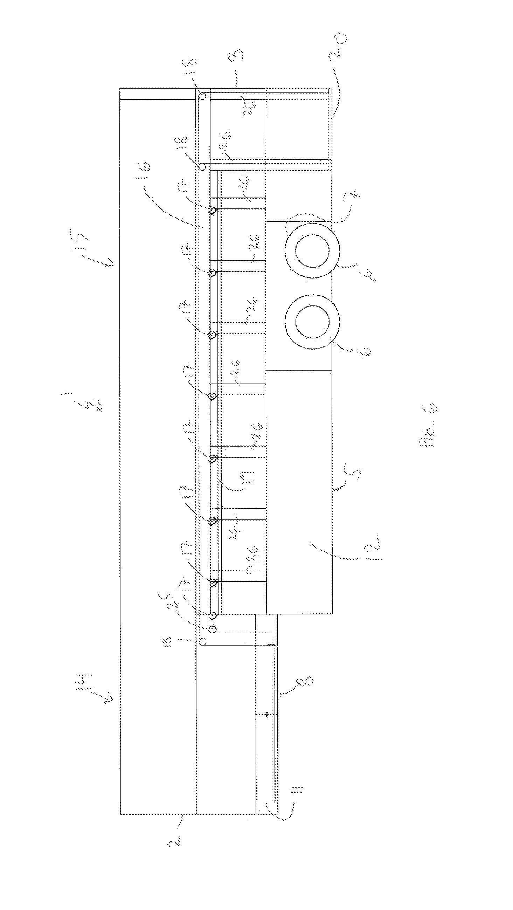

Fig 5 and 6 shows the trailer from the same perspective as fig 1. Here the decks are in different positions than in fig 1. On fig. 5 the partition deck 19 is at the same height as the bottom of the front part of the trailer 14. Further, the lift deck 20 is at the same height as the partition deck 19. It is then possible to use a pallet jack to move cargo to the volume of the front part of the trailer in a comfortable manner. The person loading or unloading the trailer can the use the lift deck 20 to move the goods to the needed height and then move it to the back of the trailer 1.

In fig. 6 the partition deck 19 is in the highest position. This ensures good access to the lower compartment of the trailer, as the person loading and unloading the lower compartment can stand upright, securing an excellent working position. It is important to have the right working posture when handling large and/or heavy objects.

When loading the trailer, the following method could be used: Firstly the partition deck 19 is moved so it is at the same level as the bottom of the rear part of the trailer 15, then the lift deck 20 is used to load cargo on to the partition deck 19 and further on to the front part of the trailer 14. When the front part of the trailer 14 is filled and the partition deck 19 is filled with cargo, the upper volume is filled out completely. Then there is made room so that the partition deck 19 can be raised. When this is done, the lower compartment is filled. Finally the area where the lift deck 20 is, can be filled with cargo. This can be done by filling the lift with cargo and then raising the lift deck 20 and filling the volume under the lift deck 20. This is only an example of a method for loading the trailer 1, any suitable method could be used. The unloading of the cargo would be done in the opposite way as loading.

The vehicle 1 also has locking means for securing that the partition deck 19 and/or the lift deck 20 are held in a vertical position even though the wire is loosened.

### Reference list:

1 vehicle
2 front end
3 loading end
4 top
5 bottom
6 wheels
7 fender
8 bottom
9 left side
10 right side
11 actuator compartment
12 primary actuator
13 secondary actuator
14 front most part of the trailer
15 rear part of the trailer
16 upper member
17 pulleys
18 pulleys
19 partition deck
20 lift deck
21 stiffening members
23 pulley
24 pulley
25 pulley
26 vertical members
27 first or left wire
28 second or right wire
29 left part of the secondary wire
30 right part of the secondary wire
31 pulley
32 pulley

## Claims

1. A vehicle for storage of a load during transportation, such as a trailer for a tractor-trailer freight carrying vehicle comprising
- a load volume comprising a top, bottom, front end, a loading end, a first side and a second side
- an adjustable partition deck, provided between the first side and the second side,
dividing at least part of the cargo volume into a upper and a lower compartment
wherein the partition deck is provided with elevation means for adjusting the vertical position of the partition deck, and the elevation means comprises an actuator system connected to the partition deck via a wire pulling system.

2. A vehicle according to claim 1, wherein the actuator system comprises a plurality of actuators which is operated in a parallel manner.

3. A vehicle according to claim 1, wherein the actuator system comprises a single actuator connected to the partition deck.

4. A vehicle according to any of the preceding claims, wherein partition deck comprises a first side region, adjacent to the first side of the cargo volume, and a second side region, adjacent to the second side of the cargo volume wherein the wire pulling system is connected to the first side region of the partition deck, and to the second side region of the partition deck.

5. A vehicle according to claim 4, wherein the wire pulling system is connected to the first side region of the partition deck in at least two separate points, and to the second side region of the partition deck in at least two separate points.

6. A vehicle according to claim 5, wherein the part of the wire pulling system that is connected to the first side region and the wire pulling system that is connected to the second side region is symmetrically configured.

7. A vehicle according to any of the preceding claims, wherein the vehicle comprises a first side wall at the first side and a second side wall at the second side wherein the wire pulling system at least partly is accommodated in the side walls.

8. A vehicle according to any of the preceding claims, the vehicle comprises wheels

9. A vehicle according to any of the preceding claims, wherein the vehicle is a trailer.

10. A vehicle according to any of the claims 8 to 9, wherein the bottom of the vehicle is positioned lower than the rotating axle of the wheels.

11. A vehicle according to any of the claims 7 to 9, wherein the vehicle is adapted to be able to increase and decrease the vertical distance between the bottom and the rotating axle of the wheels, and wherein the distance can be increased so the vehicle bottom will rest on the ground.

12. A vehicle according to any of the preceding claims, wherein the vehicle comprises a vertical positionable lift deck located at the loading end of the vehicle.

13. A vehicle according to claim 11 wherein the lift deck is connected to a lift actuator system via a lift wire pulling system.

14. A vehicle according to any of the claims 11 to 12, wherein the lift deck and the partition deck do not overlap, preferably in such a way that when the lift deck and the partition deck are situated at the same vertical level they will be adjacent to each other.

15. A vehicle according to any of the preceding claims, wherein the vehicle comprises a first side wall at the first side and a second side wall at the second side and wherein it further comprises holding means which is adapted to hold the partition deck in a desired height so that it is possible to remove the tension on the wire pulling system from the load on the partition deck.

16. A vehicle according to any of the preceding claims, where in the actuator system is positioned near the front end of the vehicle.
